# EUROPEAN PATENT SPECIFICATION

(11) **EP 2 045 346 B1**
(45) Date of publication and mention of the grant of the patent: **25.02.2015**
(21) Application number: 08017294.3
(22) Date of filing: 01.10.2008
(51) Int. Cl.: C22C 33/02, B22F 7/06, B22F 7/08, B22F 3/16, C22C 19/07, C22C 27/04, C22C 38/18, C22C 38/40

(54) **Method for producing a sintered composite sliding part**
Herstellungsverfahren für ein gesintertes Verbundwerkstoff-Gleitelement
Procédé de production d'une pièce coulissante en composite fritté

(30) Priority: 05.10.2007 JP 2007262113
(43) Date of publication of application: 08.04.2009
(73) Proprietor: Hitachi Powdered Metals Co., Ltd., Matsudo-shi Chiba 270-2295 (JP)
(72) Inventor: Yoshihiro, Tatsuaki, Matsudo-shi, Chiba 270-2295 (JP); Kawata, Hideaki, Matsudo-shi Chiba 270-2295 (JP); Mogami, Michiharu, Chiba 270-2295 (JP); Kimura, Yutaka, Chiba 270-2295 (JP)
(74) Representative: Eisenführ Speiser

(56) References cited:
- EP-A- 1 284 300
- EP-A- 1 536 028
- GB-A- 2 153 388
- US-A- 4 137 106
- US-A- 4 729 789
- US-A1- 2007 169 585

## Description

### BACKGROUND OF THE INVENTION

### Technical Field

The present invention relates to a sintered composite part in which an outer member made of a sintered member and an inner member made of an ingot steel are diffusion bonded together by sintering. Specifically, the present invention relates to a sintered composite sliding part, in which a sintered member having a superior wear resistance at high temperature is used as the outer member, and relates to a production method of the sintered composite sliding part.

### Background Art

Powdered metallurgical methods allow to the formation of a member having a shape nearly that of the product and allow the production of composite materials that cannot be obtained from ingot materials. Therefore, powdered metallurgical methods may be used for producing various industrial parts, and specifically, the powdered metallurgical methods are widely used for producing parts for automobiles and parts of two-wheeled motor vehicles. In view of these circumstances, recently, powdered metallurgical methods are also used for producing parts that must have wear resistance and corrosion resistance at high temperatures, such as parts of exhaust apparatuses (see Japanese Examined Patent Publication No.05-041693) and parts of turbochargers (see Japanese Patent Application of Laid-Open No. 2002-226955).

A sintered material used in the above parts has wear resistance and thereby has low toughness, whereby some component parts may have strength that is insufficient. Therefore, the sintered material may be used together with a steel material such that an outer member that must have wear resistance is made of the sintered material, and an inner member that must have strength is made of the steel material. In this case, if the outer member and the inner member are bonded by soldering, when the outer member and the inner member are used at high temperatures, the solder material may be melted, and the member may come off. Since the sintered material is porous, thermal conductivity and electrical conductivity are small, gas tends to remain in the pores and form blowholes in welded portions, and quenching cracks are easily caused by transformation strain, whereby the sintered material may not be suitably used in welding. When the inner member is pressed into the outer member, or the outer member is fixed to the inner member by swaging, cracks easily occur in the sintered material having low toughness. If the interference between the outer member and the inner member is decreased so as to avoid these cracks, bonding strength of the outer member and the inner member is decreased, and the member may come off when used.

US-A- 4,729,789 discloses a sintered composite part for the use as extruder screw and a production method thereof, comprising: an outer member made of an wear resistant sintered member in which a hard phase is dispersed in a matrix at 25-96 wt. % and an inner member made of a ingot steel. The matrix is made of an Fe-B alloy including metals such as Cr or Ni and the hard phase is formed by precipitating and dispersing metallic borides in an alloy matrix made of Fe. The outer member is formed with a hole and the inner member is closely fitted into the hole and the outer member is made of a green compact and bonded to the outer surface of the metal core by shrinking due to the formation of a liquid phase during the sintering steps.
US 2007/169585 A1 discloses an alloy powder for forming a hard phase for a valve seat material having excellent high temperature wear resistance. The overall composition is consisted of Mo: 48 to 60 mass %, Cr: 3 to 12 mass % and Si: 1 to 5 mass %, and the balance of Co and inevitable impurities.

### SUMMARY OF THE INVENTION

An object of the present invention is to provide a production methode for a sintered composite sliding part according to claim 1 in which an outer member made of a sintered member having superior wear resistance and corrosion resistance at high temperatures is securely bonded to an inner member made of an ingot steel.

The sintered composite sliding part has an outer member made of an Fe-based wear resistant sintered member in which a hard phase is dispersed in a matrix at 15 to 70 % by volume, and has an inner member made of a stainless steel. The matrix is made of an Fe-based alloy including 11 to 35 % by mass of Cr, and the hard phase is formed by precipitating and dispersing at least one selected from the group consisting of intermetallic compounds, metallic silicides, metallic carbides, metallic borides, and metallic nitrides in an alloy matrix made of at least one selected from the group consisting of Fe, Ni, Cr, and Co. The outer member is formed with a hole, the inner member is closely fitted into the hole, and the outer member and the inner member are diffusion bonded together. In this case, the Fe-based alloy preferably includes 3.5 to 22 % by mass of Ni. The hard phase preferably consists of 20 to 60 % by mass of Mo, 3 to 12 % by mass of Cr, 1 to 12 % by mass of Si, and the balance of Co and inevitable impurities, and molybdenum silicides are preferably precipitated and dispersed in the Co-based alloy of the hard phase.

The present invention provides a production method for the sintered composite sliding part, and the method includes preparing an Fe-based alloy powder including 11 to 35 % by mass of Cr and a hard phase forming alloy powder. The hard phase forming alloy powder forms a hard phase, in which at least one selected from the group consisting of intermetallic compounds, metallic silicides, metallic carbides, metallic borides, and metallic nitrides is precipitated and dispersed in an alloy matrix made of at least one selected from the group consisting of Fe, Ni, Cr, and Co, by sintering. The method also includes adding the hard phase forming alloy powder into the Fe-based alloy powder at 15 to 70 % by volume, and mixing the hard phase forming alloy powder and the Fe-based alloy powder so as to obtain a mixed powder as a raw powder. Moreover, the method includes compacting the raw powder into a shape of an outer member with a hole so as to obtain a compact as an outer member, closely fitting an inner member made of a stainless ingot steel into the hole of the outer member, and sintering the outer member and simultaneously diffusion bonding the outer member and the inner member together. In this case, the Fe-based alloy powder preferably includes 3.5 to 22 % by mass of Ni, and the hard phase forming alloy powder preferably consists of 20 to 60 % by mass of Mo, 3 to 12 % by mass of Cr, 1 to 12 % by mass of Si, and the balance of Co and inevitable impurities.

In the production method of the sintered composite sliding part of the present invention, instead of the above compact, a presintered recompressed compact formed by presintering and recompressing the compact may be used as the outer member to be closely fitted to the inner member. In this case, density of the outer member can be increased, whereby the wear resistance and the corrosion resistance thereof can be improved.

By using a fine powder that includes powder particles having a maximum particle diameter of not more than 46 µm at not less than 90 % by mass as the Fe-based alloy powder, although compressibility of the raw powder is decreased, the specific surface area of the raw powder is increased, whereby sinterability is improved, and a density of the outer member is increased. In this case, if a granulated powder formed by granulating the above fine powder so as to have an average particle diameter of 80 to 150 µm is used, the decrease in the compressibility can be reduced while maintaining the sinterability of the fine powder.

In the sintered composite sliding part of the present invention, a sintered member having wear resistance and corrosion resistance at high temperatures is used for an outer member, a stainless steel having corrosion resistance at high temperatures is used for an inner member, and the outer member and the inner member are diffusion bonded together. Therefore, the sintered composite sliding part has superior wear resistance, corrosion resistance, and strength at high temperatures, and has a good bonding strength at high temperatures. In the production method of the sintered composite sliding part of the present invention, sintering of the outer member and the diffusion bonding of the outer member and the inner member are simultaneously performed, whereby the above sintered composite sliding part can be produced with high efficiency.

### PREFERRED EMBODIMENTS OF INVENTION

A sintered material is used for an outer member of the sintered composite sliding part of the present invention, and the sintered material is formed by dispersing a hard phase having superior wear resistance and corrosion resistance in a matrix made of an Fe-based alloy having corrosion resistance. Specifically, the matrix of the outer member includes 11 to 35 % by mass of Cr and has compositions of a ferrite stainless steel. By setting the amount of Cr in the matrix to be not less than 11 % by mass, the matrix can have good corrosion resistance with respect to oxidizing acids. On the other hand, when the amount of Cr in the matrix is more than 35 % by mass, brittle σ phases tend to be formed, and the sintered member is embrittled. Accordingly, the amount of Cr included in the matrix is preferably set to be 11 to 35 % by mass.

The above matrix of the outer member may include 3.5 to 22 % by mass of Ni. In this case, by setting the amount of Ni in the matrix to be not less than 3.5 % by mass, the matrix can have improved corrosion resistance with respect to nonoxidizing acids. When the amount of Ni is 10 % by mass or more, the matrix can have good corrosion resistance with respect to nonoxidizing acids regardless of the amount of Cr, and the matrix has compositions of an austenite stainless steel. On the other hand, since the corrosion resistance is not further improved even when Ni is added to the matrix at more than 22 % by mass, and Ni is an expensive material, the upper limit of the amount of Ni is set to be 22 % by mass.

The above matrix made of the Fe-based alloy may further include elements such as Mo, Nb, Al, Si, Se, P, S, and N, as is conventional. That is, by adding Mo to the matrix at 0.3 to 7 % by mass, creep resistance, acid resistance, corrosion resistance, and pitting corrosion resistance of the matrix can be improved, and machinability of the outer member can also be improved. Intergranular corrosion resistance of the matrix can be improved by adding Nb to the matrix at 0.45 % by mass or less, and heat resistance of the matrix can be improved by adding Al to the matrix at 0.1 to 5 % by mass. By adding N to the matrix at 0.3 % by mass or less, crystal grains of the matrix can be adjusted. By adding Si to the matrix at 0.15 to 5 % by mass, oxidation resistance, heat resistance, and sulfuric acid resistance of the matrix can be improved. The intergranular resistance of the matrix and the machinability of the outer member can also be improved by adding to the matrix at least one selected from the group consisting of not more than 0.15 % by mass of Se, not more than 0.2 % by mass of P, and not more than 0.15 % by mass of S.

In order to uniformly provide the effects of Cr and Ni to the entirety of the matrix, the entirety of the matrix must have a uniform composition. Therefore, in the present invention, Cr and Ni are alloyed with Fe in advance so that Cr and Ni are added to the matrix in the form of an Fe-based alloy powder. That is, in the production method of the present invention, a powder including 11 to 35 % by mass of Cr and the balance of Fe and inevitable impurities, or a powder including 11 to 35 % by mass of Cr, 3.5 to 22 % by mass of Ni, and the balance of Fe and inevitable impurities, is used as the Fe-based alloy powder. The Fe-based alloy powder may include the elements such as Mo, Nb, Al, Si, Se, P, S, and N in the above amounts as necessary.

A hard phase may be formed by precipitating and dispersing at least one hard material selected from the group consisting of intermetallic compounds, metallic silicides, metallic carbides, metallic borides, and metallic nitrides in an alloy matrix that has corrosion resistance and is made of at least one selected from the group consisting of Fe, Ni, Cr, and Co. Such a hard phase is suitably used as the above hard phase. The intermetallic compounds, the metallic silicides, the metallic carbides, the metallic borides, and the metallic nitrides are hard particles and prevent plastic flow of the matrix, and the wear resistance of the sintered member can be improved thereby. Since theses hard particles disperse by precipitating, the hard phase is securely affixed to the alloy matrix and does not easily come off. The alloy matrix made of at least one selected from the group consisting of Fe, Ni, Cr, and Co has corrosion resistance, and the alloy elements of the alloy matrix primarily disperse into the above matrix having stainless steel compositions during sintering, whereby the characteristics of the matrix and the fixability of the hard phase are improved.

The above hard phase is added to the matrix in the form of an alloy powder including all compositions of the hard phase, so that the above metallic structure is formed by sintering. That is, in the present invention, a hard phase forming alloy powder is added to the Fe-based alloy powder for forming the matrix, and they are mixed together so as to obtain a mixed powder as a raw powder. Since the raw powder is formed in such a manner, a predetermined amount of the hard phase can be uniformly dispersed into the metallic structure in sintering by adjusting the addition amount of the hard phase forming alloy powder.

The above hard phase is dispersed at 15 to 70 % by volume in the above matrix having the stainless steel compositions. When the amount of the hard phase is less than 15 % by volume, the wear resistance of the matrix is not effectively increased. On the other hand, in dispersing the hard phase into the matrix at more than 70 % by volume, the ratio of the hard phase forming alloy powder in the raw powder is too large, whereby the formability of the raw powder is extremely decreased. Therefore, in the production method of the present invention, the hard phase forming alloy powder is added at 15 to 70 % by volume to the Fe-based alloy powder having the above compositions, and the mixture thereof is used as a raw powder.

In the above hard phase, molybdenum silicides having wear resistance and lubricating property are most preferable as the hard particles, and a Co alloy matrix having strength and corrosion resistance at high temperatures is most preferable as the alloy matrix. In this combination, the composition of the hard phase consists of 20 to 60 % by mass of Mo, 3 to 12 % by mass of Cr, 1 to 12 % by mass of Si, and the balance of Co and inevitable impurities. When the amount of Mo is less than 20 % by mass, the amount of molybdenum silicides precipitated is decreased, whereby wear resistance of the hard phase will be insufficient. When the amount of Mo is greater than 60 % by mass, the hard particles precipitated are brittle, whereby the outer member is easily chipped by impacts. When the amount of Cr is less than 3 % by mass, the bond of the hard phase to the stainless steel matrix is decreased, and when the amount of the Cr is greater than 12 % by mass, oxide films are readily formed on the surfaces of the powder particles, and sintering may be inhibited. When the amount of Si is less than 1 % by mass, the amount of molybdenum silicides precipitated is decreased, whereby the wear resistance of the hard phase will be insufficient. When the amount of Si is greater than 12 % by mass, Si dispersed into the stainless steel matrix hardens the matrix, whereby the outer member tends to damage facing members. In addition, the Si causes embrittlement of the stainless steel matrix, and the wear resistance of the outer member is thereby decreased. Therefore, each composition of the hard phase forming ally powder is preferably within the above range.

The above raw powder is compacted into a freely selected shape of an outer member with a hole for being closely fitted with an inner member, and an outer member compact is obtained. Then, the hole of the outer member compact is closely fitted with an inner member made of an ingot steel, and the outer member compact and the inner member are assembled together. Since the inner member is required to have corrosion resistance at high temperatures, a stainless ingot steel is used as the ingot steel for the inner member.

The dimensional difference is preferably set so that the inner member is interference fitted to the outer member compact at an interference that is within 2 % of the diameter of the hole. Alternatively, the dimensional difference between the hole of the outer member compact and the inner member is preferably set so that the inner member is through fitted to the outer member compact at a clearance of not more than 0.7 % of the diameter of the hole. That is, by setting the inner member so as to have a large diameter and pressing the inner member into the hole of the outer member compact (interference fit), the inner member and the outer member compact are closely fitted, and the degree of the fitting thereof is increased as the interference increases. In this case, in order to prevent the outer member compact having low strength from being damaged by tensile stress, the interference is preferably set to be within 1 %, or not more than 2%, of the diameter of the hole. On the other hand, when the inner member is through fitted to the outer member compact, a smaller clearance is more preferable, and the clearance should not be more than 0.7 % of the diameter of the hole.

The outer member compact and the inner member assembled together are put into a sintering furnace so as to be sintered. In the sintering, compositional elements diffuse between powder particles, and necks grow, whereby the outer member compact is sintered and becomes a sintered member. Simultaneously, since the outer member compact does not include a powder which leads to expansion by sintering, such as a graphite powder and a copper powder, the outer member compact shrinks as the sintering proceeds. On the other hand, the inner member made of an ingot steel is thermally expanded by heating. Therefore, in the sintering at a temperature of 800 °C or higher, pressure occurs at the interface between the outer member compact and the inner member, and the outer member compact and the inner member are thereby securely closely fitted together. At that time, the compositional elements of the outer member compact and the inner member are mutually solid-phase diffused at the interface between the outer member compact and the inner member, whereby the outer member compact and the inner member are diffusion bonded. As a result, the outer member compact becomes a sintered member having superior wear resistance and corrosion resistance at high temperatures, and a sintered composite sliding part in which the outer member and the inner member are strongly bonded together is obtained.

In the above sintered composite sliding part, the outer member is not subjected to overstress, thereby avoiding cracks, which may occur in press fitting and swaging. The outer member and the inner member are metallurgically bonded and thereby have a high bonding strength.

The sintered member obtained by the above method as the outer member has pores, whereby the outer member has a large surface area. Since corrosion (oxidation) occurs from the surface, the corrosion resistance of the outer member can be further improved by decreasing the amount of the pores.

As one method for decreasing the pores, the following method may be mentioned. The above outer member compact may be presintered and may be recompressed so as to form a presintered recompressed compact before the outer member compact is closely fitted with the inner member, the inner member is closely fitted into the hole of the presintered recompressed compact, and then sintering is performed in the above manner. In the presintering, compressive strain stored in the raw powder of the compact is released. By recompressing this compact, a presintered recompressed compact having a higher density than that of the compact can be obtained. Such a material having a high density (having a small amount of pores) is closely fitted with the inner member and is then sintered, whereby an outer member having a high density, that is, having a small amount of pores and a small specific surface area, is formed. In order to release the compressive strain stored in the raw powder, the presintering temperature is preferably set to be 600 °C or higher. On the other hand, if the presintering temperature is too high, necks grow between the raw powder particles, and the raw powder is not easily made denser by recompressing. Therefore, the upper limit of the presintering temperature is preferably set to be 1000 °C.

Another method for decreasing the pores is to use a powder, which is mostly made of a fine powder having a maximum particle diameter of not more than 46 µm, as the Fe-based alloy powder. When the fine powder is used as the raw powder, bridging tends to occur, and formability is decreased. At the same time, the specific surface area is increased, and contact portions among powder particles, at which necks begin to grow, are increased, whereby sintering readily proceeds, and a sintered compact having a high density is obtained. In order to efficiently obtain these effects, the fine powder having a maximum particle diameter of not more than 46 µm is preferably included in the Fe-based alloy powder at 90 % or more.

In the method for densifying the sintered compact by using the above fine powder so as to improve the sinterability, the fine powder may be granulated in advance so as to be a granulated powder having an average particle diameter of 80 to 150 µm. In this case, the decrease in the formability due to the fine powder can be avoided, whereby the raw powder is more densified in sintering.

### Example

### First Example

Inner members were prepared, and the inner members were made of an ingot steel corresponding to SUS304 specified by the Japanese Industrial Standard (JIS) and had an outer diameter of 20 mm and a height of 10 mm. Fe-based alloy powders and a hard phase forming alloy powder having compositions shown in Table 1 were prepared, and they were mixed together at the mixing ratio shown in Table 1 so as to obtain raw powders. The average particle diameter of the Fe-based alloy powders was 100 µm, and the average particle diameter of the hard phase forming alloy powders was 100 µm. The raw powders were compacted under a forming pressure of 800 MPa so as to have a ring shape with an outer diameter of 30 mm, an inner diameter of 20 mm, and a height of 5 mm, and 15 ring-shaped compacts were prepared with respect to each combination of the Fe-based alloy powder and the hard phase forming alloy powder. Batches of 10 of the ring-shaped compacts were used as outer member compacts, and the hole of each outer member compact was closely fitted with an inner member so that the outer member and the inner member were assembled together. In this case, the outer member and the inner member were through fitted at a clearance of 10 µm. Batches of 10 of the assembled members and batches of 5 of the ring-shaped compacts were placed into a sintering furnace and were heated to 1200 °C in a decomposed ammonia gas atmosphere. Thus, the outer members of the assembled members were sintered while the outer members and the inner members were diffusion bonded, and the ring-shaped compacts were sintered, whereby samples of sample Nos. 01 to 07 were obtained.

In these samples, batches of 5 of the sintered composite samples having the outer member and the inner member bonded together were used for oxidation tests and extracting tests, respectively, and the oxidized amounts after the oxidation tests and bonding strengths were measured. The batches of 5 of the ring-shaped samples were used for repeated sliding friction tests, and wear amounts were measured after the friction test. The oxidized amounts, the wear amounts, and the bonding strengths obtained in this way with respect to batches of 5 samples were averaged, and the average values are shown in Table 1.

The oxidation test was performed such that each sample was placed in each crucible made of an alumina, and all of the crucibles were placed into a muffle furnace and were heated at 800 °C for 100 hours in an air atmosphere. The difference in weight of the sample before and after the test was measured, and the difference in weight was divided by the surface area and was then evaluated as an oxidized amount (g/m²).

The repeated sliding friction test was performed such that a roller (facing member) having a diameter of 15 mm and a thickness of 22 mm was repeatedly slid on the above ring-shaped sample by pressing the side surface of the roller with a predetermined load. In this test, an ingot steel according to SUS316 specified by the JIS, of which the surface was treated by chromizing, was used as a material of the roller. The chromizing treatment was performed by coating a surface with a chromium and forming a hard Fe-Cr intermetallic compound layer on the surface, so that wear resistance, seizing resistance, and corrosion resistance were improved. The repeated sliding friction test was performed in an air atmosphere under the following conditions. The load was 50 N, the frequency of repeated sliding was 20 Hz, the amplitude of repeated sliding was 1.5 mm, the test time was 20 minutes, and the test temperature was 700 °C.

The extracting test was performed by supporting the lower end surface of the outer member with a jig and pressing the inner member, and the pressure in which the bonding of the outer member and the inner member was broken, that is, the bonding strength was evaluated.

**Table 1**

| Sample No. | Outer member | | | | | | Inner member | Test results | | |
|---|---|---|---|---|---|---|---|---|---|---|
| | mixing ratio % by volume | | | | | | | Oxidized amount g/m² | Wear amount µm | Bonding strength MPa |
| | Fe-based alloy powder | | | | Hard phase forming alloy powder | | | | | |
| | | Compositions % by mass | | | | Compositions | | | | |
| | | Fe | Cr | Ni | | | | | | |
| 01* | Balance | Balance | 7.0* | 20.0 | 25.0 | Co-28Mo.8Cr-2.5Si | SUS304 | 220 | 86 | 840 |
| 02 | Balance | Balance | 11.0 | 20.0 | 25.0 | Co-28Mo-8Cr-2.5Si | SUS304 | 101 | 23 | 820 |
| 03 | Balance | Balance | 20.0 | 20.0 | 25.0 | Co-28Mo-8Cr-2.5Si | SUS304 | 37 | 11 | 850 |
| 04 | Balance | Balance | 25.0 | 20.0 | 25.0 | Co-28Mo-8Cr-2.5Si | SUS304 | 23 | 7 | 900 |
| 05 | Balance | Balance | 30.0 | 20.0 | 25.0 | Co-28Mo-8Cr-2.5Si | SUS304 | 21 | 9 | 870 |
| 06 | Balance | Balance | 35.0 | 20.0 | 25.0 | Co-28Mo-8Cr-2.5Si | SUS304 | 46 | 28 | 800 |
| 07* | Balance | Balance | 40.0* | 20.0 | 25.0 | Co-28Mo-8Cr-2.5Si | SUS304 | 160 | 65 | 700 |

| | | | | | | | | | | |
|---|---|---|---|---|---|---|---|---|---|---|
| * comparative example | | | | | | | | | | |

As shown in Table 1, in the sample of the sample No. 01 including less than 11 % by mass of Cr, the oxidized amount was 220 g/m² and was large. On the other hand, in the sample of the sample No. 02 including 11 % by mass of Cr, the oxidized amount was 101 g/m² and was approximately half of the oxidized amount in the sample No. 01. In the samples including 20 to 35 % by mass of Cr (the sample Nos. 03 to 06), the oxidized amounts were more decreased, and the corrosion resistances were good. In the sample of the sample No. 07 including more than 35 % by mass of Cr, the oxidized amount was extremely increased. This is because the raw powder was hardened too much, whereby the compressibility was decreased, and the compacted density was decreased. As a result, the sintered density was reduced, and the specific surface area was increased.

In the sample of the sample No. 01 including less than 11 % by mass of Cr, the wear amount was 86 µm and was large. On the other hand, in the sample of the sample No. 02 including 11 % by mass of Cr, the strength at high temperatures was improved, and the wear amount was extremely decreased to 23 µm. In the samples including 20 to 35 % by mass of Cr (the sample Nos. 03 to 06), the wear amounts were more decreased, and the wear resistances were good. In the sample of the sample No. 07 including more than 35 % by mass of Cr, the wear amount was extremely increased. This is because the raw powder was hardened too much, whereby the compressibility was decreased, and the compacted density was decreased. As a result, the sintered density was decreased, whereby the strength of the matrix was decreased, and the matrix was embrittled.

In the samples including not more than 35 % by mass of Cr (the sample Nos. 01 to 06), the bonding strengths were good. On the other hand, in the sample of the sample No. 07 including more than 35 % by mass of Cr, the bonding strength was decreased. This is because the raw powder was hardened too much, whereby the compressibility was decreased, and the compacted density was decreased. As a result, the sintered density was decreased, whereby the strength of the matrix was decreased, and the matrix was embrittled.

According to these results, when the amount of Cr in the outer member is 11 to 35 % by mass, a sintered composite sliding part having good corrosion resistance, wear resistance, and bonding strength can be obtained.

### Second Example

Fe-based alloy powders having compositions shown in Table 2 and the hard phase forming alloy powder used in the first example were prepared, and they were mixed together at the mixing ratio shown in Table 2 so as to obtain raw powders. By using these raw powders, compacting, closely fitting, and sintering were performed in the same manner as in the first example, and samples having sample Nos. 08 to 14 were obtained. Powders having an average particle diameter of 100 µm, which was the same as the average particle diameter of powders used in the first example, were used as the Fe-based alloy powders.

For these samples, oxidation tests, repeated sliding friction tests, and extracting tests were performed under the same conditions as those in the first example, and the oxidized amounts after the oxidation tests, wear amounts after the friction tests, and bonding strengths were measured. These results are shown in Table 2, and the results of the sample of the sample No. 04 in the first example are also shown in Table 2.

**Table 2**

| Sample No. | Outer member | | | | | | Inner member | Test results | | |
|---|---|---|---|---|---|---|---|---|---|---|
| | mixing ratio % by volume | | | | | | | Oxidized amount g/m² | Wear amount µm | Bonding strength MPa |
| | Fe-based alloy powder | | | | Hard phase forming alloy powder | | | | | |
| | | Compositions % by mass | | | | Compositions | | | | |
| | | Fe | Cr | Ni | | | | | | |
| 08 | Balance | Balance | 25.0 | 0 | 25.0 | Co-28Mo-8Cr-2.5Si | SUS304 | 68 | 48 | 850 |
| 09 | Balance | Balance | 25.0 | 3.5 | 25.0 | Co-28Mo-8Cr-2.5Si | SUS304 | 48 | 30 | 880 |
| 10 | Balance | Balance | 25.0 | 5.0 | 25.0 | Co-28Mo-8Cr-2.5Si | SUS304 | 41 | 21 | 890 |
| 11 | Balance | Balance | 25.0 | 10.0 | 25.0 | Co-28Mo-8Cr-2.5Si | SUS304 | 30 | 10 | 930 |
| 12 | Balance | Balance | 25.0 | 15.0 | 25.0 | Co-28Mo-8Cr-2.5Si | SUS304 | 26 | 8 | 910 |
| 04 | Balance | Balance | 25.0 | 20.0 | 25.0 | Co-28Mo-8Cr-2.5Si | SUS304 | 23 | 7 | 900 |
| 13 | Balance | Balance | 25.0 | 22.0 | 25.0 | Co-28Mo-8Cr-2.5Si | SUS304 | 23 | 7 | 880 |
| 14 | Balance | Balance | 25.0 | 25.0 | 25.0 | Co-28Mo-8Cr-2.5Si | SUS304 | 22 | 7 | 900 |

As shown in Table 2, the sample of the sample No. 08 which did not include Ni exhibited an oxidized amount that was 68 g/m², whereas the sample of the sample No. 09 including 3.5 % by mass of Ni exhibited an oxidized amount that was decreased to 48 g/m². Accordingly, addition of Ni can improve the corrosion resistance. In the samples including 5 to 20 % by mass of Ni (the sample Nos. 10 to 12, and 04), the oxidized amounts were decreased as the amount of Ni was increased. In the samples including more than 20 % by mass of Ni (the sample Nos. 13 and 14), the oxidized amounts were very small and were approximately constant values.

In the sample of the sample No. 08 which did not include Ni, the wear amount was 48 µm, whereas in the sample of the sample No. 09 including 3.5 % by mass of Ni, the wear amount was decreased to 30 µm. Accordingly, addition of Ni can improve the strength at high temperatures. In the samples including 5 to 20 % by mass of Ni (the sample Nos. 10 to 12, and 04), the wear amounts were further decreased as the amount of Ni was increased. The sample including more than 20 % by mass of Ni (the sample Nos. 13 and 14) exhibited wear amounts that were approximately constant and small. The bonding strengths were good regardless of the amount of Ni. According to these results, by adding Ni to the outer member at 3.5 % by mass or more, the corrosion resistance and the wear resistance can be improved.

### Third Example

The Fe-based alloy powder used in the sample No. 04 in the first example and hard phase forming alloy powders were prepared, and they were mixed together at the mixing ratio shown in Table 3 so as to obtain raw powders. By using these raw powders, compacting, closely fitting, and sintering were performed in the same manner as in the first example, and samples having sample Nos. 15 to 21 were obtained.

For these samples, oxidation tests, repeated sliding friction tests, and extracting tests were performed under the same conditions as those in the first example, and the oxidized amounts after the oxidation test, wear amounts after the friction test, and bonding strengths were measured. These results are shown in Table 3, and the results of the sample of the sample No. 04 in the first example are also shown in Table 3.

**Table 3**

| Sample No. | Outer member | | | | | | Inner member | Test results | | |
|---|---|---|---|---|---|---|---|---|---|---|
| | mixing ratio % by volume | | | | | | | Oxidized amount g/m² | Wear amount µm | Bonding strength MPa |
| | Fe-based alloy powder | | | | Hard phase forming alloy powder | | | | | |
| | | Compositions % by mass | | | | Compositions | | | | |
| | | Fe | Cr | Ni | | | | | | |
| 15 | Balance | Balance | 25.0 | 20.0 | 5.0 | Co-28Mo-8Cr-2.5Si | SUS304 | 15 | 86 | 970 |
| 16 | Balance | Balance | 25.0 | 20.0 | 15.0 | Co-28Mo-8Cr-2.5Si | SUS304 | 20 | 30 | 930 |
| 04 | Balance | Balance | 25.0 | 20.0 | 25.0 | Co-28Mo-8Cr-2.5Si | SUS304 | 23 | 7 | 900 |
| 17 | Balance | Balance | 25.0 | 20.0 | 40.0 | Co-28Mo-8Cr-2.5Si | SUS304 | 32 | 4 | 870 |
| 18 | Balance | Balance | 25.0 | 20.0 | 50.0 | Co-28Mo-8Cr-2.5Si | SUS304 | 40 | 3 | 850 |
| 19 | Balance | Balance | 25.0 | 20.0 | 60.0 | Co-28Mo-8Cr-2.5Si | SUS304 | 50 | 8 | 840 |
| 20 | Balance | Balance | 25.0 | 20.0 | 70.0 | Co-28Mo-8Cr-2.5Si | SUS304 | 75 | 34 | 800 |
| 21 | Balance | Balance | 25.0 | 20.0 | 80.0 | Co-28Mo-8Cr-2.5Si | SUS304 | 154 | 88 | 690 |

As shown in Table 3, as the addition amount of the hard phase forming alloy powder (that is, the amount of the hard phase) increases, the compressibility of the raw powder is decreased, and the density of the sintered compact is decreased, whereby the oxidized amount tends to increase. In the sample of the sample No. 21 in which the addition amount of the hard phase forming alloy powder was more than 70 % by mass, the compressibility of the raw powder was extremely decreased, whereby the oxidized amount was further increased.

As shown in Table 3, in the sample of the sample No. 15 in which the addition amount of the hard phase forming alloy powder was less than 15 % by mass, the wear amount was 86 µm and was large. On the other hand, in the sample of the sample No. 16 in which the addition amount of the hard phase forming alloy powder was 15 % by mass, the wear resistance was improved, and the wear amount was decreased to 30 µm. In the samples in which the addition amount of the hard phase forming alloy powder was 25 to 60 % by mass (the sample Nos. 04, and 17 to 19), the wear amounts were more decreased, and the wear resistances were good. In the sample in which the addition amount of the hard phase forming alloy powder was 70 % by mass (the sample No. 20), the raw powder was hardened, and the compressibility was decreased, whereby the wear resistance was increased. Moreover, in the sample of the sample No. 21 in which the addition amount of the hard phase forming alloy powder was more than 70 % by mass, the compressibility was extremely decreased, whereby the wear amount was further increased.

As shown in Table 3, the bonding strength was slightly decreased as the addition amount of the hard phase forming alloy powder was increased. The sample of the sample No. 20 exhibited a bonding strength of 800 MPa, and the bonding strength is good when the addition amount of the hard phase forming alloy powder was 70 % by mass. In the sample of the sample No. 21 in which the addition amount of the hard phase forming alloy powder was more than 70 % by mass, the compressibility was extremely decreased, whereby the bonding strength was further decreased.

As described above, when the addition amount of the hard phase forming alloy powder is 15 to 70 % by mass, a sintered composite sliding part having good corrosion resistance, wear resistance, and bonding strength can be obtained.

### Fourth Example

The Fe-based alloy powder used in the sample No. 04 in the first example and hard phase forming powders shown in Table 4 were prepared, and they were mixed together at the mixing ratio shown in Table 4 so as to obtain raw powders. By using these raw powders, compacting, closely fitting, and sintering were performed in the same manner as in the first example, and samples having sample Nos. 22 to 25 were obtained. Powders having an average particle diameter of 100 µm, which was the same as the average particle diameter of powders used in the first example, were used as the hard phase forming alloy powders.

For these samples, oxidation tests, repeated sliding friction tests, and extracting tests were performed under the same conditions as those in the first example, and the oxidized amounts after the oxidation test, wear amounts after the friction test, and bonding strengths were measured. The results are shown in Table 4, and the results of the sample of the sample No. 04 in the first example are also shown in Table 4.

**Table 4**

| Sample No. | Outer member | | | | | | Inner member | Test results | | |
|---|---|---|---|---|---|---|---|---|---|---|
| | mixing ratio % by volume | | | | | | | Oxidized amount g/m² | Wear amount µm | Bonding strength MPa |
| | Fe-based alloy powder | | | | Hard phase forming alloy powder | | | | | |
| | | Compositions % by mass | | | | Compositions | | | | |
| | | Fe | Cr | Ni | | | | | | |
| 04 | Balance | Balance | 25.0 | 20.0 | 25.0 | Co-28Mo-8Cr-2.5Si | SUS304 | 23 | 7 | 900 |
| 22 | Balance | Balance | 25.0 | 20.0 | 25.0 | Co-50Mo-10Cr-3Si | SUS304 | 50 | 4 | 910 |
| 23 | Balance | Balance | 25.0 | 20.0 | 25.0 | Fe-35Mo-6Si-15Cr-2Mn | SUS304 | 41 | 13 | 940 |
| 24 | Balance | Balance | 25.0 | 20.0 | 25.0 | Fe-12Cr-1Mo-0.5V-1.4C | SUS304 | 45 | 25 | 980 |
| 25 | Balance | Balance | 25.0 | 20.0 | 25.0 | Ni-30Cr-9Mo-1Si-2C | SUS304 | 13 | 18 | 860 |

In each sample in Table 4, the sample of the sample No. 04 had a hard phase in which granular molybdenum silicides were primarily dispersed in a Co-based alloy matrix by precipitating, the sample of the sample No. 22 had a hard phase in which aggregated molybdenum silicides were primarily dispersed in a Co-based alloy matrix by precipitating. The sample of the sample No. 23 had hard a phase in which granular molybdenum silicides were primarily dispersed in an Fe-based alloy matrix by precipitating, and the sample of the sample No. 24 had a hard phase in which granular chromium carbide was primarily dispersed in an Fe-based alloy matrix by precipitating. The sample of the sample No. 25 had a hard phase in which granular carbides of Cr and Mo were primarily dispersed in a Ni-based alloy matrix by precipitating.

As shown in Table 4, when the kind of the hard phase forming alloy powder is changed so as to change the form of the hard phase formed by sintering, a sintered composite sliding part having sufficient corrosion resistance, wear resistance, and bonding strength can be obtained. Each sample exhibited sufficient corrosion resistance and wear resistance. Specifically, the samples of the sample Nos. 04 and 22 in which the molybdenum silicides were precipitated in the Co-based alloy matrix exhibited wear amounts that were very small, and the samples of the sample Nos. 04 and 22 can be preferably used when the wear resistance is primarily required.

### Fifth Example

The outer member compact of the sample No. 04 in the first example was presintered at 850 °C and then recompressed at 800 MPa, and the outer member compact and the inner member of the first example were assembled by closely fitting the inner member into the hole of the compact. Then, the outer member compact and the inner member were sintered under the same conditions as those in the first example, so that a sample of sample No. 26 was formed. Oxidation test was performed on the sample of the sample No. 26 under the same conditions as those in the first example, and the oxidized amount was 14 g/m². Accordingly, by presintering and recompressing the compact, the corrosion resistance can be further improved.

### Sixth Example

The Fe-based alloy powder having compositions of the sample No. 04 in the first example was passed through a screen with 300 mesh, and an Fe-based alloy powder consisting only of a fine powder that passed through the screen mesh (a powder having a maximum particle diameter of 46 µm) was prepared. This Fe-based alloy powder and the hard phase forming alloy powder having an average particle diameter of 100 µm used in the first example were mixed together in the same mixing ratio as that of the sample No. 04 in the first example so as to obtain a mixed powder. By using the mixed powder, compacting, closely fitting, and sintering were performed in the same manner as in the first example so as to form a sample of sample No. 27. Oxidation test was performed on the sample of the sample No. 27 under the same conditions as those in the first example, and the oxidized amount was 18 g/m². Accordingly, by using a fine powder having particle diameters of not more than 46 µm as the Fe-based alloy powder, the corrosion resistance can be further improved.

## Claims

1. A production method for a sintered composite sliding part, comprising:
preparing an Fe-based alloy powder consisting of 11 to 35 % by mass of Cr, optionally including at least one selected from the group consisting of 3.5 to 22 % by mass of Ni, 0.3 to 7 % by mass of Mo, 0.45 % by mass or less of Nb, 0.1 to 5 % by mass of Al, 0.3 % by mass or less of N, 0.15 to 5 % by mass of Si, 0.15 % by mass or less of Se, 0.2 % by mass or less of P, and 0.15 % by mass or less of S and balance of Fe and inevitable impurities, and
a hard phase forming alloy powder consisting of 20 to 60 % by mass of Mo, 3 to 12 % by mass of Cr, 1 to 12 % by mass of Si, and the balance of Co and inevitable impurities, the hard phase forming alloy powder for forming a hard phase by sintering, the hard phase being formed so that molybdenum silicides is dispersed in Co alloy matrix by precipitating;
adding the hard phase forming alloy powder into the Fe-based alloy powder at 15 to 70 % by volume;
mixing the hard phase forming alloy powder and the Fe-based alloy powder so as to obtain a mixed powder as a raw powder;
compacting the raw powder into a shape of an outer member with a hole so as to obtain an outer member compact,
closely fitting an inner member made of a stainless ingot steel into the hole of the outer member compact; and
sintering the outer member compact and simultaneously diffusion bonding the outer member compact and the inner member together by solid-phase-diffusion.

2. The production method according to claim 1, wherein the production method further comprises presintering the outer member compact, recompressing the outer member compact so as to obtain a presintered recompressed compact, closely fitting the inner member into the hole of the presintered recompressed compact, and sintering the presintered recompressed compact and simultaneously diffusion bonding the presintered recompressed compact and the inner member together.

3. The production method according to claim 1 or 2, wherein a powder including powder particles having a maximum particle diameter of not more than 46 µm at not less than 90 % by mass is used as the Fe-based alloy powder.

4. The production method according to claim 3, wherein a granulated powder formed by granulating the powder recited in claim 3 so as to have an average particle diameter of 80 to 150 µm is used as the Fe-based alloy powder.

## Patentansprüche

1. Ein Herstellungsverfahren für ein gesintertes zusammengesetztes gleitendes Bauteil, umfassend:
Herstellen eines Fe-basierten Legierungspulvers bestehend aus 11 bis 35 Masse-% Cr, optional beinhaltend wenigstens eines ausgewählt aus der Gruppe bestehend aus 3,5 bis 22 Masse-% Ni, 0,3 bis 7 Masse-% Mo, 0.45 Masse-% oder weniger Nb, 0,1 bis 5 Masse-% Al, 0,3 Masse-% oder weniger N, 0,15 bis 5 Masse-% Si, 0,15 Masse-% oder weniger Se, 0,2 Masse-% oder weniger P, und 0,15 Masse-% oder weniger S und Rest Fe sowie unvermeidbare Verunreinigungen, und
eines eine harte Phase bildendes Legierungspulver bestehend aus 20 bis 60 Masse-% Mo, 3 bis 12 Masse-% Cr, 1 bis 12 Masse-% Si, und Rest Co sowie unvermeidbare Verunreinigungen, wobei das eine harte Phase bildende Legierungspulver eine harte Phase beim Sintern bildet, wobei die harte Phase gebildet wird, so dass Molybdänsilizide in der Co-Legierungsmatrix durch Ausfällen dispergiert werden;
Zugeben des eine harte Phase bildenden Legierungspulvers in das Fe-basierte Legierungspulver zu 15 bis 70 Volumen%;
Mischen des eine harte Phase bildenden Legierungspulvers und des Fe-basierten Legierungspulvers, um ein gemischtes Pulver als Rohpulver zu erhalten;
Verdichten des Rohpulvers in eine Form eines äußeren Teils mit einem Loch, um ein verdichtetes äußeres Teil zu erhalten;
eng Anpassen eines inneren Teils hergestellt aus Edelstahlbarren in das Loch des verdichteten äußeren Teils; und
Sintern des verdichteten äußeren Teils und gleichzeitig Diffusionsschweißen des verdichteten äußeren Teils zusammen mit dem inneren Teil durch Festphasendiffusion.

2. Das Herstellungsverfahren nach Anspruch 1, wobei das Herstellungsverfahren weiterhin umfasst: Vorsintern des verdichteten äußeres Teils; Rekompressieren des verdichteten äußeres Teils, um ein vorgesintertes, rekompressiertes, verdichtetes Teil zu erhalten; eng Anpassen des inneren Teils in das Loch des vorgesinterten, rekompressierten, verdichteten Teils; und Sintern des vorgesinterten, rekompressierten, verdichteten Teils und gleichzeitig Diffusionsschweißen des vorgesinterten, rekompressierten, verdichteten Teils und des inneren Teils.

3. Das Herstellungsverfahren nach Anspruch 1 oder 2, wobei ein Pulver enthaltend Pulver-Partikel mit einem maximalen Partikeldurchmesser von nicht mehr als 46 µm bei nicht weniger als 90 Masse-% als das Fe-basierte Legierungspulver verwendet wird.

4. Das Herstellungsverfahren nach Anspruch 3, wobei ein granuliertes Pulver gebildet durch Granulieren des Pulvers gemäß Anspruch 3, so dass es einen mittleren Partikeldurchmesser von 80 bis 150 µm hat, als das Fe-basierte Legierungspulver verwendet wird.

## Revendications

1. Procédé de production d'une pièce glissante en composite fritté, comprenant :
préparer une poudre d'alliage à base de Fe consistant en 11 à 35 % en masse de Cr, incluant facultativement au moins l'un sélectionné du groupe consistant en 3,55 à 22 % en masse de Ni, en 0,3 à 7 % en masse de Mo, en 0,45 % en masse ou moins de Nb, en 0,1 à 5 % en masse d'Al, en 0,3 % en masse ou moins de N, en 0,15 à 5 % en masse de Si, en 0,15 % en masse ou moins de Se, en 0,2 % en masse ou moins de P et en 0,15 % ou moins de S et le solde en Fe et en impuretés inévitables et
une poudre d'alliage formant une phase dure consistant en 20 à 60 % de Mo, en 3 à 12 % en masse de Cr, en 1 à 12 % en masse de Si et le solde en Co et en impuretés inévitables, la poudre d'alliage formant une phase dure étant destinée à former une phase dure par frittage, la phase dure étant formée de manière à disperser des siliciures de molybdène dans une matrice en alliage de Co par précipitation ;
ajouter la poudre d'alliage formant une phase dure dans la poudre d'alliage à base de Fe à raison de 15 à 70 % en volume ;
mélanger la poudre d'alliage formant une phase dure et la poudre d'alliage à base de Fe, de manière à obtenir une poudre mélangée comme poudre brute ;
compacter la poudre brute sous la forme d'un élément extérieur ayant un trou, de manière à obtenir un comprimé d'élément extérieur,
adapter étroitement un élément intérieur en un acier inoxydable fondu dans le trou du comprimé d'élément extérieur ; et
fritter le comprimé d'élément extérieur et lier par diffusion simultanément le comprimé d'élément extérieur et le comprimé d'élément intérieur ensemble par diffusion en phase solide.

2. Procédé de production suivant la revendication 1, dans lequel le procédé de production comprend, en outre, préfritter le comprimé d'élément extérieur, recomprimer le comprimé d'élément extérieur de manière à obtenir un comprimé préfritté recomprimé, adapter étroitement l'élément intérieur dans le trou du comprimé préfritté recomprimé et fritter le comprimé préfritté recomprimé et lier simultanément par diffusion le comprimé préfritté recomprimé et l'élément intérieur ensemble.

3. Procédé de production suivant la revendication 1 ou 2, dans lequel on utilise comme poudre d'alliage à base de Fe une poudre comprenant des particules de poudre ayant un diamètre maximum de particule non supérieur à 46 µm à pas moins de 90 % en masse.

4. Procédé de production suivant la revendication 3, dans lequel on utilise comme poudre d'alliage à base de Fe une poudre granulée formée en granulant la poudre mentionnée à la revendication 3, de manière à avoir un diamètre moyen de particule de 80 à 150 µm.
